# EUROPÄISCHE PATENTSCHRIFT

(11) **EP 2 147 363 B1**
(45) Veröffentlichungstag und Bekanntmachung des Hinweises auf die Patenterteilung: **24.04.2013**
(21) Anmeldenummer: 08750124.3
(22) Anmeldetag: 07.05.2008
(51) Int. Cl.: G06F 3/02, G06F 3/048

(54) **VERFAHREN UND VORRICHTUNG ZUM AUSWÄHLEN VON BEZEICHNUNGEN AUS WENIGSTENS EINEM VORGEGEBENEN WORTSCHATZ**
METHOD AND DEVICE FOR SELECTING DESIGNATIONS FROM AT LEAST ONE PREDETERMINED WORD POOL
PROCÉDÉ ET DISPOSITIF PERMETTANT DE SÉLECTIONNER DES DÉSIGNATIONS APPARTENANT À AU MOINS UN VOCABULAIRE PRÉDÉFINI

(30) Priorität: 07.05.2007 DE 102007021814
(43) Veröffentlichungstag der Anmeldung: 27.01.2010
(73) Patentinhaber: Ford-Werke GmbH, 50735 Köln (DE)
(72) Erfinder: LA TENDRESSE, Ingo, 50739 Köln (DE); MÜLLER, Holger, 50735 Köln (DE); LANGO, Clemens, 40477 Düsseldorf (DE)
(86) Internationale Anmeldenummer: PCT/EP2008/055602
(87) Internationale Veröffentlichungsnummer: WO 2008/135585

(56) Entgegenhaltungen:
- EP-A- 0 789 224
- EP-A- 1 081 582
- EP-A2- 1 061 714
- WO-A1-00/62150
- US-A- 5 818 437
- US-B1- 6 392 640
- "COMMAND Operator's Manual, Part number 171 584 61 81" Juni 2004 (2004-06), MERCEDES-BENZ , UNITED STATES OF AMERICA , XP002485897 Seite 12 Seite 129 - Seite 130 Seite 135 - Seite 142

## Beschreibung

Die Erfindung betrifft ein Verfahren sowie eine Vorrichtung zum Auswählen von Bezeichnungen aus wenigstens einem vorgegebenen Wortschatz.

In Vorrichtungen wie Navigationssystemen, Multimedia-Abspielgeräten, MP3-Playern oder Mobiltelefonen stellt es ein bekanntes Problem dar, die benutzerseitige Eingabe der zu verarbeitenden Daten im Hinblick auf die i.d.R. begrenzten Tastatur- und Anzeigefelder effizient und benutzerfreundlich zu gestalten. So nimmt etwa bei Touchscreen-Systemen die Darstellung des vollständigen Alphabetes mit jeweils einzeln auswählbaren Buchstaben häufig einen zu großen Platz auf der Anzeigefläche ein. Hingegen ist bei selektiver Darstellung des Alphabetes zumeist für das Erreichen einer nächsten Auswahlgruppe (z.B. Buchstabenzeile) eine separate Tastenbetätigung oder das Führen eines Zeigers bis zum Ende einer Zeile erforderlich.

Es sind diverse Ansätze bekannt, um die Anzahl der erforderlichen Eingabeschritte und/oder den Platzbedarf auf der Eingabevorrichtung zu reduzieren.

Als Eingabehilfe auf einem Mobiltelefon ist insbesondere das unter der Bezeichnung T9^{™} von der Firma Tegic Communications Inc., USA vertriebene Eingabeverfahren bekannt, bei dem zur Eingabe eines Wortes für jeden Buchstaben die entsprechende, jeweils mit mehreren Buchstaben belegte Taste nur einmal betätigt wird, und wobei das Mobiltelefon mit Hilfe eines Wörterbuches erkennt, welches Wort gemeint ist. Im Falle von Mehrdeutigkeiten werden die der Tastenkombination entsprechenden, in Frage kommenden Worte in Form einer Auswahlliste angezeigt.

Aus EP 0 842 463 B1 ist ein System zum Entscheiden über von einem Benutzer eingegebene mehrdeutige Eingabesequenzen bekannt, welches eine Benutzereingabeeinrichtung (Tastatur) mit einer Mehrzahl von Eingängen (Tasten) umfasst, denen jeweils eine Mehrzahl von Zeichen zugeordnet ist. Bei jeder Tasteneingabe wird eine Eingabesequenz mit einer mehrdeutigen Textinterpretation erzeugt. Dabei werden aus einem vervollständigte Wörter enthaltenden Speicher Objekte identifiziert, zu denen die jeweils generierte Eingabesequenz gehört, wobei die identifizierten Objekte dem Benutzer in der Reihenfolge abnehmender Benutzungshäufigkeit präsentiert werden.

Aus EP 1 061 714 A2 ist ein Verfahren zum Auswählen von Bezeichnungen aus einer vorgegebenen Liste bekannt, bei dem von einem Zeicheneingabemodus in einen Auswahllistenmodus gewechselt wird, wenn die in der Liste gespeicherten Bezeichnungen, deren Anfangszeichenfolge mit der jeweils bisher eingegebenen Zeichenfolge übereinstimmt, kleiner oder gleich einer vorgegebenen Anzahl ist. Dabei sind aus der vollständig angezeigten Zeichenliste nur solche Zeichen eingebbar, die die bisher eingegebene Zeichenfolge so ergänzen, dass die dann eingegebene Zeichenfolge Bestandteil zumindest einer Bezeichnung in der vorgegebenen Liste ist, um das Auswählen einer Bezeichnung zu vereinfachen.

Aus DE 198 27 753 A1 ist ein Verfahren zur Auswahl und Eingabe von Symbolen mit Hilfe einer Anzeigeeinheit und einer zugeordneten Auswahl- und Eingabevorrichtung bekannt, wobei auf der Anzeigeeinheit zunächst eine Eingabeposition für das einzugebende Symbol festgelegt wird und dann die auszuwählenden Symbole in einer Reihe auf der Anzeigeeinheit dargestellt werden, die durch die Eingabeposition verläuft. Das entsprechende Symbol wird ausgewählt, indem die angezeigten Symbole in Richtung der Reihe schrittweise durch die Eingabeposition bewegt werden, bis das ausgewählte Symbol in der Eingabeposition erscheint und ausgewählt werden kann.

Aus DE 10 2004 029 824 A1 ist ein Bediensystem für ein Fahrzeug bekannt, welches eine Eingabeeinheit, eine Ausgabeeinheit und eine Speller-Applikation umfasst, mit welcher Informationen zeichenweise in das Bediensystem eingebbar sind. Die Speller-Applikation umfasst mehrere sprachabhängige Zeichensätze, von denen ein Zeichensatz durch Auswahl einer Bediensprache einstellbar ist, um eine einfache Anpassung an verschiedene Bediensprachen zu ermöglichen. Die Auswahl der Bediensprache für die Speller-Applikation ist beispielsweise mit einem Untermenü durchführbar, dass vom Benutzer durch eine entsprechende Eingabe über die Eingabeeinheit aktivierbar ist.

Die Schriftstücke "COMMAND Operator's Manual, Part number 171 584 61 81", Juni 2004 (2004-06), MERCEDES-BENZ, UNITED STATES OF AMERICA, XP002485897; EP 0 789 224 A und WO 00/62150 A1 offenbaren Verfahren zum Auswählen von Bezeichnungen aus wenigstens einem vorgegebenen Wortschatz.

Es ist Aufgabe der vorliegenden Erfindung, ein Verfahren sowie eine Vorrichtung zum Auswählen von Bezeichnungen aus wenigstens einem vorgegebenen Wortschatz bereitzustellen, welche eine weitere Vereinfachung der Handhabung und der Auswahl einer Bezeichnung ermöglichen.

Diese Aufgabe wird durch das Verfahren gemäß den Merkmalen des unabhängigen Patentanspruches 1 bzw. durch die Vorrichtung gemäß den Merkmalen des Patentanspruches 9 gelöst.

Weitere Ausgestaltungen der Erfindung sind der Beschreibung sowie den Unteransprüchen zu entnehmen.

Ein Verfahren zum Auswählen von Bezeichnungen aus wenigstens einem vorgegebenen Wortschatz weist folgende Schritte auf:
- Eingeben, in einem Zeicheneingabemodus, alphanumerischer Zeichen über eine Eingabeeinheit, wobei die Eingabeeinheit eine Mehrzahl von Eingabefeldern aufweist, wobei wenigstens einigen der Eingabefelder mehrere alphanumerische Zeichen zugeordnet sind;
- Wechseln von dem Zeicheneingabemodus in einen Auswahlmodus, wenn eine vorbestimmte Bedingung erfüllt ist, wobei in dem Auswahlmodus in Abhängigkeit von der bislang eingegebenen Zeichenfolge eine Kandidatenliste mit einem oder mehreren Kandidaten aus dem vorgegebenen Wortschatz präsentiert wird;
- Auswählen eines Kandidaten aus der Kandidatenliste;
- wobei zur Eingabe jedes alphanumerischen Zeichens im Zeicheneingabemodus jeweils nur eine einmalige Betätigung eines Eingabefeldes vorgenommen wird (so dass die Auswahl des gewünschten Kandidaten im übrigen über einen Abgleich mit den verbliebenen Kandidaten bzw. den verbleibenen Bezeichnungen im Wortschatz während des Eingabemodus bzw. die gezielte Auswahl während des Auswahlmodus erfolgt, womit eine besonders effektive und schnelle Auswahl einer Bezeichnung ermöglicht wird); und
- wobei die vorbestimmte Bedingung für den Übergang in den Auswahlmodus dann erfüllt ist, wenn die Anzahl von in dem betreffenden Wortschatz enthaltenen Bezeichnungen, denen wenigstens eine der bislang eingegebenen Zeichenfolgen zugeordnet werden kann, einen vorgegebenen Schwellwert unterschreitet.

Durch den erfindungsgemäß erfolgenden Wechsel von dem Zeicheneingabemodus in einen Auswahlmodus mit Ermöglichung der unmittelbaren Auswahl eines Kandidaten aus der präsentierten Kandidatenliste in Kombination mit der Mehrfachbelegung der einzelnen Eingabefelder wird eine weitere Vereinfachung der Handhabung erreicht und eine beschleunigte Auswahl einer Bezeichnung durch den Benutzer ermöglicht, da die Anzahl der erforderlichen Interaktionen bzw. Eingabeschritte seitens des Benutzers reduziert werden kann. Dabei wird zugleich infolge der Mehrfachbelegung eine Verringerung der Anzahl erforderlicher Eingabefelder und damit eine größere Gestaltungsfreiheit und Übersichtlichkeit hinsichtlich des verwendeten Bedienungsfeldes geschaffen.

Gemäß einer bevorzugten Ausführungsform weist das Verfahren vor dem Schritt des Eingebens alphanumerischer Zeichen den weiteren Schritt auf: Auswählen eines Wortschatzes aus einer Mehrzahl unterschiedlicher Wortschätze, wobei der ausgewählte Wortschatz nach Wechseln in den Auswahlmodus für die Präsentation des einen oder mehreren Kandidaten zugrunde gelegt wird. Auf diese Weise kann von Situation zu Situation ein unterschiedlicher Wortschatz (z.B. im Falle eines Multimedia-Abspielgerätes oder eines MP3-Players mit Bezeichnungen der verfügbaren Künstler oder auch der verfügbaren Musiktitel) zugrunde gelegt und zur Auswahl angeboten werden.

Gemäß einer bevorzugten Ausführungsform erfolgt für den Fall, dass die bislang eingegebene Zeichenfolge eindeutig einer bestimmten Bezeichnung aus dem vorgegebenen Wortschatz zugeordnet werden kann, eine automatische Eingabebestätigung, wodurch gegebenenfalls eine weitere Verkürzung für das Prozedere bis zur endgültigen Auswahl der Bezeichnung erreicht werden kann. Dadurch, dass in der Regel die automatisch bestätigte Bezeichnung vor dem letzten bereits auf dem Display als eine mögliche Option dargestellt wurde, kommt die jeweils letztlich automatisch ausgewählte Bezeichnung für den Benutzer nicht überraschend, so dass die automatische Bestätigung für den Benutzer wirklich von Vorteil ist.

Gemäß einer bevorzugten Ausführungsform erfolgt schrittweise nach jeder Eingabe im Zeicheneingabemodus eine automatische Aussortierung von Bezeichnungen in dem vorgegebenen Wortschatz, welchen keine der bislang eingegebenen Zeichenfolgen zugeordnet werden kann. Auf diese Weise wird erreicht, dass bei den nachfolgenden Schritten nicht mehr die gesamte Datenbank bzw. der gesamte Wortschatz berücksichtigt werden muss, was einen effektiveren und schnelleren Abgleich unter Verringerung des Rechenaufwandes ermöglicht.

Gemäß einer bevorzugten Ausführungsform wird nach jeder Eingabe im Zeicheneingabemodus ein Eingabefeld deaktiviert, falls keine Zeichenfolge, die sich aus Hinzufügung eines beliebigen Zeichens der dem jeweiligen Eingabefeld zugeordneten Zeichen zu den bislang eingegebenen Zeichenfolgen ergibt, einer Bezeichnung aus dem vorgegebenen Wortschatz zugeordnet werden kann. Diese Deaktivierung kann mit einer veränderten Darstellung für den Benutzer (z.B. einer abweichenden Beleuchtung oder einer veränderten graphischen Darstellung der deaktivierten Eingabefelder) kombiniert werden, um die Übersicht für den Benutzer zu erhöhen und die Handhabung bei der Auswahl der noch folgenden Eingabefelder zu erleichtern und zu beschleunigen. Insbesondere dann, wenn das Eingabefeld virtuell über einen Touchscreen dargestellt wird, können deaktivierte Eingabefelder z.B. in grau dargestellt werden.

Gemäß einer bevorzugten Ausführungsform wird nach jeder Eingabe im Eingabemodus die Anzahl der verbliebenen Kandidaten aus dem vorgegebenen Wortschatz, welche wenigstens einer der bislang eingegebenen Zeichenfolgen zugeordnet werden können, präsentiert.

Gemäß einer bevorzugten Ausführungsform werden in dem Auswahlmodus die Kandidaten der Kandidatenliste gemäß wenigstens einem vorgegebenen Kriterium hinsichtlich der Reihenfolge ihrer Präsentation priorisiert. Beispielsweise können die verbliebenen Kandidaten im Falle der Eingabe eines Zielortes in ein Navigationssystem nach der Größe der Städte (hinsichtlich Einwohnerzahl oder Gesamtfläche), nach ihrer Entfernung zur aktuellen oder einer anderen bestimmten Position (z.B. Entfernung zu der in der Vergangenheit am häufigsten angesteuerten Position) oder nach der Häufigkeit der in der Vergangenheit erfolgten Auswahl priorisiert werden. Im Falle der Eingabe eines Musiktitels in einem Multimedia-Abspielgerät oder einem MP3-Player können die angezeigten Musiktitel z.B. in Abhängigkeit von den zuletzt gespielten Musiktiteln oder der Dateigröße priorisiert werden. Insgesamt kann auf diese Weise die verfügbare Information vor Präsentation (z.B. Anzeige) für den Benutzer gefiltert und gegebenenfalls eine weitere Beschleunigung des Auswahlprozesses erzielt werden.

In einer bevorzugten Ausgestaltung kann der Benutzer auch, wenn eigentlich schon zum Auswahlmodus übergegangen wurde, die dargestellte Auswahl immer noch durch Betätigung der Eingabeeinheit weiter einschränken. Dies ist besonders dann vorteilhaft, wenn der Benutzer in der Bedienung der Eingabeeinheit sehr routiniert ist; derartige Benutzer werden dazu neigen, die gesuchte Bezeichnung "blind", d.h. ohne Beobachtung der aktuellen Auswahlliste, einzugeben. Diese Ausgestaltung eignet sich besonders für Eingabeeinheiten mit mechanischer Tastatur, da diese Tastatur ja stets bereit steht, im Gegensatz zu einer Touchscreen-Darstellung, bei der es im Auswahlmodus sinnvoll ist, diese zugunsten der Listendarstellung auszublenden.

Der automatische Wechsel vom Zeicheneingabemodus zum Auswahlmodus und/oder die automatische Bestätigung der Eingabe kann durch Tonsignale und/oder visuelle Signale (Displayfarbe) zusätzlich angezeigt werden.

Die Erfindung betrifft ferner eine Vorrichtung zum Auswählen von Bezeichnungen aus wenigstens einem vorgegebenen Wortschatz, welche dazu ausgelegt ist, ein Verfahren nach einem der vorhergehenden Ansprüche durchzuführen. Zu vorteilhaften Ausgestaltungen wird auf die obigen Ausführungen im Zusammenhang mit dem erfindungsgemäßen Verfahren Bezug genommen.

Die Erfindung wird nachstehend anhand bevorzugter Ausführungsformen unter Bezugnahme auf die beigefügten Abbildungen näher erläutert.

Es zeigen:
- Figur 1a-e: ein Eingabefeld während aufeinanderfolgender Eingabe- bzw. Auswahlschritte zur Erläuterung des Ablaufes eines erfindungsgemäßen Verfahrens gemäß einer ersten Ausführungsform; und
- Figur 2a-f: ein Eingabefeld während aufeinanderfolgender Eingabe- bzw. Auswahlschritte zur Erläuterung des Ablaufes eines erfindungsgemäßen Verfahrens gemäß einer zweiten Ausführungsform.

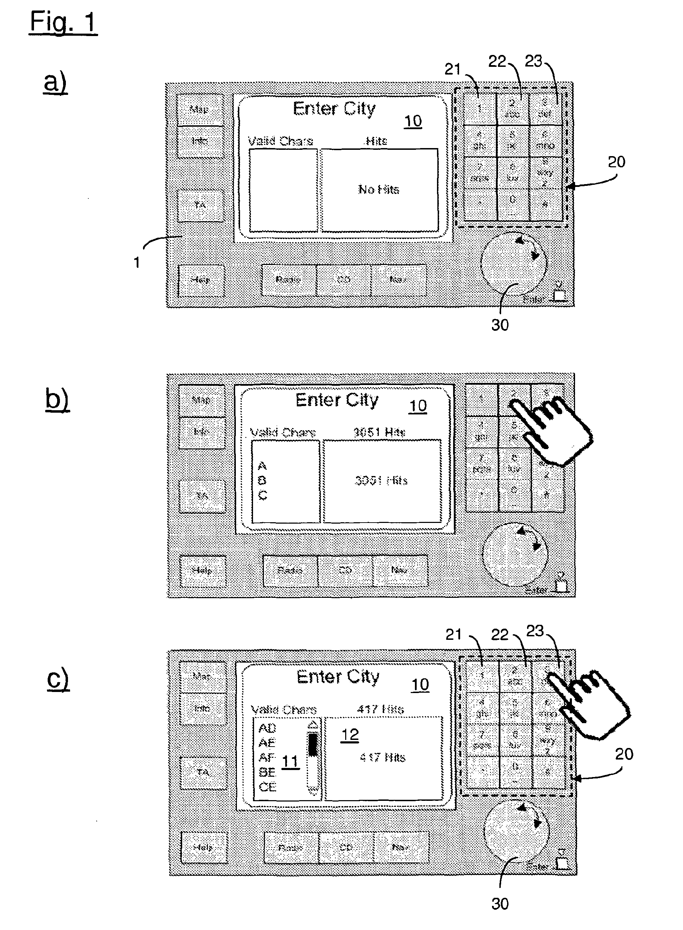

Im Weiteren wird unter Bezugnahme auf Fig. 1a-e der Ablauf eines erfindungsgemäßen Verfahrens gemäß einem ersten Ausführungsbeispiel, und zwar im Zusammenhang mit einer Zieleingabe in ein Navigationssystem, erläutert:

Fig. 1a zeigt für ein solches Navigationssystem ein typisches Bedienungsfeld 1, welches neben einem Anzeigefeld 10 eine Eingabeeinheit 20 in Form einer Tastatur mit einer Mehrzahl von Eingabefeldern bzw. Tasten 21, 22, 23,... aufweist, wobei den einzelnen Eingabefeldern bzw. Tasten 21, 22, 23,... z. T. mehrere alphanumerische Zeichen zugeordnet sind (z.B. sind dem Eingabefeld 22 die Zahl "2" sowie die Buchstaben "a", "b" und "c" zugeordnet). Die im Ausführungsbeispiel dargestellte Tastatur weist die typische Tastenanordnung einer Telefontastatur auf, so dass die Tastatur in einem anderen Betriebsmodus beispielsweise zur Wahl einer Telefonnummer für ein mit einer Freisprecheinrichtung verbundenes Mobiltelefon verwendet werden kann. Obwohl in dem Ausführungsbeispiel dedizierte (mechanische) Tasten verwendet werden, können die Tasten auch auf einem Touchscreen dargestellt werden, was insbesondere dann vorteilhaft ist, wenn die verfügbare Displayfläche zu klein ist, eine vollständige alphanumerische Tastatur dazustellen, bei der die Fläche der einzelnen Taste ausreichend groß ist, dass sich diese noch mit den Fingerkuppen bedienen ließe.

Das Bedienungsfeld 1 enthält ferner eine Eingabeeinrichtung 30, welche im dargestellten Beispiel als Dreh-Druckknopf ausgestaltet ist und mittels der einzelne Felder im Anzeigefeld 10 (mittels eines durch Drehen des Dreh-Druckknopfes über das Anzeigefeld geführten Cursors und anschließendem Drücken des Dreh-Druckknopfes) aktiviert bzw. bestimmte im Anzeigefeld 10 vorgesehene Funktionen (z.B. Auswahl einer auf dem Anzeigefeld 10 dargestellten Bezeichnung) ausgelöst werden können. Selbstverständlich können alternativ auch andere Elemente zur Verschiebung des Cursors, wie z.B. kreuzförmig angeordnete Cursortasten oder auch Scrollräder vorgesehen sein.

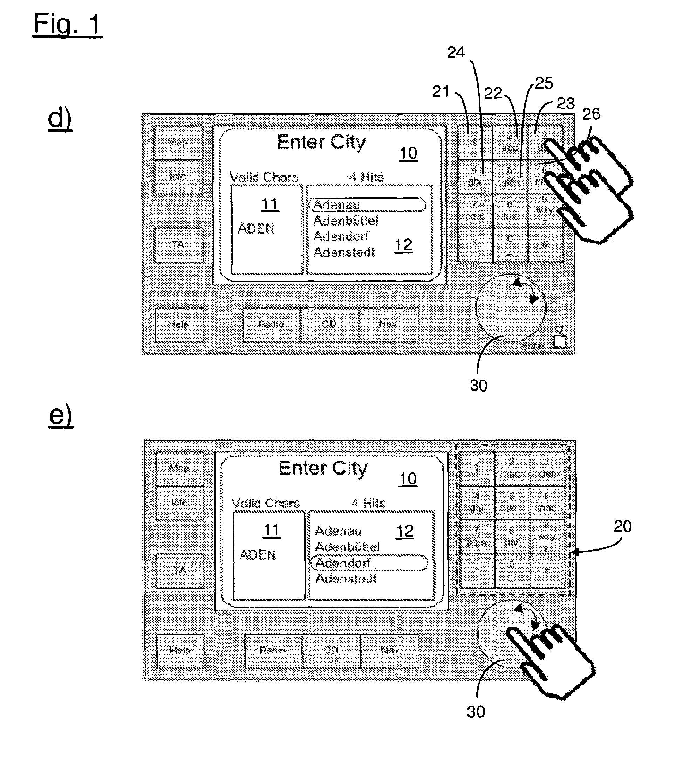

Fig. 1a-c zeigen das Bedienungsfeld 1 im Ausgangszustand (Fig. 1a) sowie nach aufeinander folgenden Eingabeschritten (Fig. 1 bund 1c), wobei der Benutzer im gezeigten Beispiel zunächst das Eingabefeld 22 (enthaltend die Buchstaben "a", "b" und "c") und sodann das Eingabefeld 23 (enthaltend die Buchstaben "d", "e" und "f") betätigt. Gemäß Fig. 1 bund 1 c werden in dem Anzeigefeld 10 nach dem jeweiligen Eingabeschritt die möglichen, sich aufgrund der in Frage kommenden Permutationen ergebenden Zeichenfolgen (im Teilfeld 11 des Anzeigefeldes 10) sowie die Anzahl der verbliebenen Kandidaten bei Abgleich mit einem vorgegebenen Wortschatz (in einem Teilfeld 12 des Anzeigefeldes 10) angezeigt.

Fig. 1d veranschaulicht einen stattfindenden Wechsel aus dem Zeicheneingabemodus in den Auswahlmodus. Dieser Übergang erfolgt gemäß Fig. 1d nach weiterer Betätigung des Tastenfeldes 23 (mit den Buchstaben "d", "e" und "f") sowie des Tastenfeldes 26 (mit den Buchstaben "m", "n" und "o"), wobei im Ausführungsbeispiel angenommen wird, dass nach Betätigung des Tastenfeldes 26 die Anzahl der verbleibenden Kandidaten auf vier reduziert ist. In diesem Auswahlmodus wird nunmehr im Teilfeld 12 zusätzlich zu der besagten Anzahl möglicher Kandidaten eine Kandidatenliste angezeigt, welche die verbliebenen Kandidaten aufführt.

Gemäß Fig. 1e erfolgt anschließend die Auswahl der gewünschten Bezeichnung (im gezeigten Beispiel der Zieleingabe in ein Navigationssystem die Auswahl des gewünschten Städtenamens) aus der besagten Auswahlliste und unter Verwendung der Eingabeeinrichtung 30. Vorzugsweise kann der Wortschatz, welcher bei dem erfindungsgemäßen Verfahren für den Vergleich mit der vom Benutzer eingegebenen Zeichenfolge, die Ermittlung möglicher Kandidaten sowie die Präsentation der Auswahlliste im Auswahlmodus zugrunde gelegt wird, von Situation zu Situation unterschiedlich sein und insbesondere vom Benutzer vorab (d.h. vor Eingabe der Zeichenfolge im Zeicheneingabemodus) ausgewählt werden.

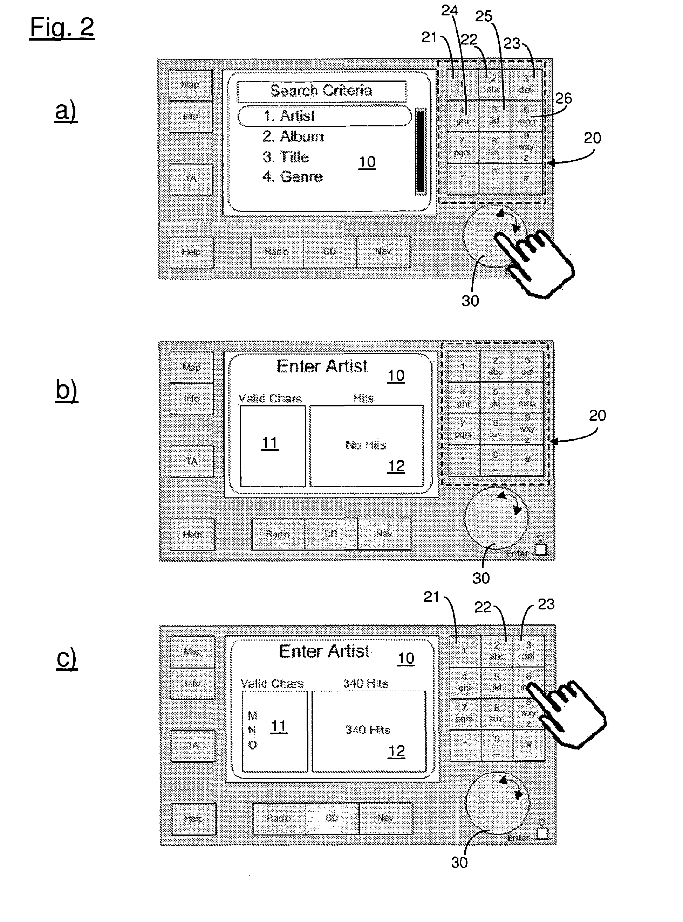

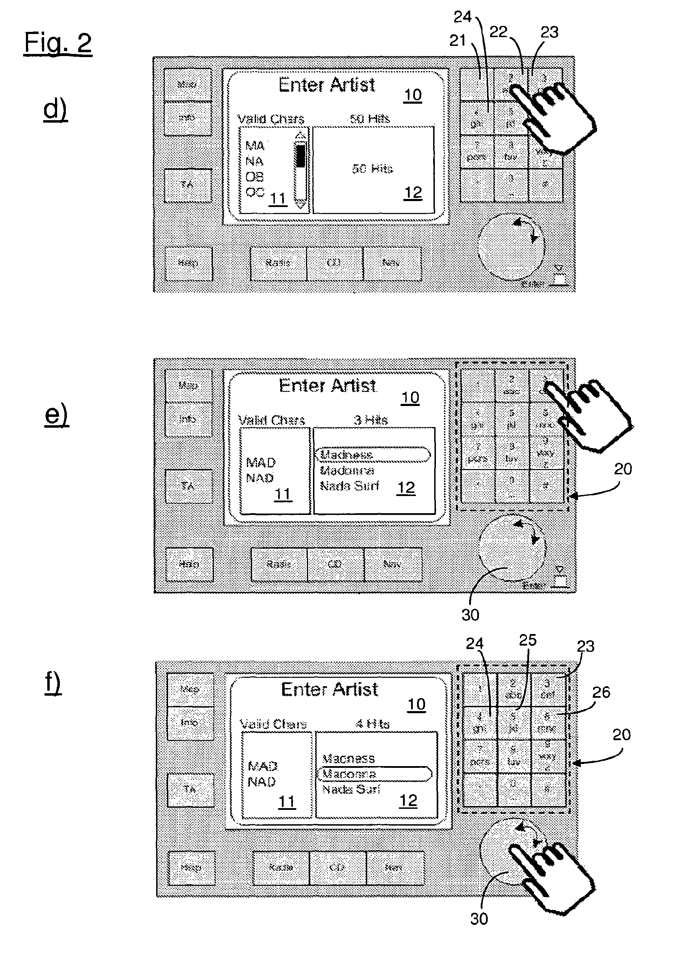

Dieser zusätzliche Auswahlschritt ist in Fig. 2a veranschaulicht. Hierbei zeigen Fig. 2a-f ein weiteres Ausführungsbeispiel des erfindungsgemäßen Verfahrens unter Anwendung auf ein Musikabspielgerät (z.B. einen MP3-Player).

Dabei zeigen Fig. 2b-f aufeinander folgende Schritte im Eingabemodus (Fig. 2c-e) bzw. nach Wechsel in den Auswahlmodus (Fig. 2f), welche bereits im Zusammenhang mit Fig. 1 erläutert wurden. Gemäß Fig. 2a-b erfolgt jedoch vor der Eingabe der einzelnen alphanumerischen Zeichen im Eingabemodus vorab die Auswahl eines bestimmten Wortschatzes (bzw. eines Suchkriteriums), wobei im gezeigten Beispiel gemäß Fig. 2a die Alternativen Künstler (= "Artist"), Album, Titel (= "Title") und Musikstil (= "Genre") zur Auswahl angeboten werden. Die im Beispiel erfolgende Auswahl "Künstler" (= "Artist") für das Suchkriterium definiert den im Weiteren zugrunde gelegten Wortschatz und ist damit bestimmend sowohl für die in den Schritten von Fig. 2c-d angezeigten Trefferzahlen sowie für die in Fig. 2e-f angezeigten Kandidatenlisten.

Im Weiteren wird ein typischer Algorithmus gemäß einer bevorzugten Ausführungsform der Erfindung erläutert. Dabei werden folgende Definitionen zugrunde gelegt:
- A:: Alphabet mit sämtlichen für die Anwendung notwendigen alphanumerischen Zeichen
- G₁, G₂,...Gₙ:: Gruppen aus alphanumerischen Zeichen mit A = G₁∪G₂∪...∪Gₙ und Gᵢ ≠ ∅; 1≤i≤n, n<|A|
- t:: t= t₁...tᵢ, t_{i∈} A ist die vom Benutzer gewünschte Bezeichnung
- Kandidatenₛ:: enthält sämtliche in Frage kommenden Kandidaten aufgrund der bisher eingegebenen Zeichenfolge bis zum Schritt s
- D:: D= {d₁,..., dₚ}; Datenbank mit sämtlichen möglichen Eingabebezeichnungen (z.B. sämtliche Städtenamen in Deutschland)
- Resultateₛ:: = Resultate des Abgleichs zwischen den Kandidaten des Kandidatenₛ mit Datenbank D bzw. mit Resultateₛ₋₁ aus vorherigem Schritt s-1

Grundsätzlich werden zur Mehrfachbelegung der einzelnen Eingabefelder zunächst die Buchstaben des verwendeten Alphabetes A in eine vorbestimmte Anzahl n von Gruppen G₁, G₂, ..., Gₙ aufgeteilt, so dass die dem Alphabet entsprechende Menge A der Vereinigungsmenge aus diesen Gruppen entspricht (d.h. A = G₁∪G₂∪...∪Gₙ).

Der Benutzer wählt für die Eingabe erforderlicher Daten (z.B. der Zieladresse in einem Navigationssystem) schrittweise jeweils eine Gruppe Gₛ (1 ≤ s ≤ n) aus, welcher der als nächstes gewünschte Buchstabe angehört. Um die Anzahl der nach jeden Schritt (d.h. nach jeder Benutzereingabe) erzeugten möglichen Texteingaben zu reduzieren, werden die in Frage kommenden Zeichenketten mit Sub-Zeichenketten von gleicher Länge der zugrundeliegenden Text-Datenbank (z.B. einer sämtliche Städtenamen enthaltenden Datenbank D) verglichen. Sämtliche Kandidaten, für die keine mögliche Übereinstimmung in der Datenbank existiert, werden gelöscht und bei den weiteren Schritten der treffenden Eingabesequenz ignoriert.

In einem Algorithmus lassen sich die einzelnen Eingabeschritte während des erfindungsgemäßen Verfahrens wie folgt darstellen:

### I. Eingabe Nr. 1:

a) Benutzer wählt Gruppe (Eingabefeld) Gₓ₁
b) Setze Kandidaten₁:= {c | b∈ Gₓ₁, c=b}
c) Abgleich mit Datenbank (Wortschatz) und Erzeugung von Resultate₁:= {r | r_{∈} D; r=r₁...rᵤ; b=r₁; b∈ Kandidaten₁}
d) Kandidaten₁:= Kandidaten₁ ohne all jene Kandidaten, für welche keine Übereinstimmung in Resultate₁
e) (optional) Anzeige von Resultate₁
f) (optional) Reduziere Anzeige auf Anzahl k_{Resultate} von Elementen aus Resultate₁ sowie Priorisierung gemäß vorbestimmtem Kriterium
g) (optional) Anzeige von Kandidaten₁

### II. Eingabe Nr. s, s≥1:

a) Benutzer wählt Gruppe (Eingabefeld) Gₓₛ
b) Kandidatenₛ:= {c | a∈ Kandidatenₛ₋₁, b∈ Gₓₛ, c=ab}
c) Abgleich mit den Ergebnissen des vorherigen Schrittes zur Erzeugung von Resultateₛ:= {r | r∈ Resultateₛ₋₁; r=r₁...rᵤ; b=r₁,...,rₛ; b∈ Kandidatenₛ; s≤u}
d) Kandidatenₛ:= Kandidatenₛ ohne all jene Kandidaten, für welche keine Übereinstimmung in Resultates
e) (optional) Anzeige von Resultateₛ
f) (optional) Reduziere Anzeige auf Anzahl k_{Resultate} Elemente aus Resultates und Priorisierung gemäß vorbestimmtem Kriterium
g) (optional) Anzeige von Kandidatenₛ

### III. Abschließende Eingabe, Eingabe S_{final}:

a) |Resultate_{Sfinal}|=1; oder
b) Benutzer ist mit den angezeigten Kandidaten (Resultate_{Sfinal}) einverstanden und wählt unmittelbar eines der Elemente aus Resultate_{Sfinal} aus;
c) gewünschte Bezeichnung (t) ∈ Resultate_{Sfinal}

Infolge der schrittweisen Reduktion der in Frage kommenden Kandidaten ist es möglich, dem Benutzer optional für jeden nachfolgenden Dialogschritt die bereits eingegebenen, gültigen Kandidaten anzuzeigen. Auf diese Weise kann die (ansonsten i. d. R. sehr große) Anzahl von Kandidaten wesentlich reduziert werden.

Zusammenfassend wird erfindungsgemäß durch Kombination einer Mehrfachbelegung einzelner Eingabefelder mit dem Wechsel aus einem Zeicheneingabemodus in einen Auswahlmodus unter Ermöglichung der unmittelbaren Auswahl eines Kandidaten aus einer präsentierten Kandidatenliste eine Vereinfachung der Handhabung erreicht und eine beschleunigte Auswahl einer Bezeichnung durch den Benutzer ermöglicht. Die Anzahl der erforderlichen Interaktionen bzw. Eingabeschritte seitens des Benutzers wird reduziert, wobei zugleich eine Verringerung der Anzahl erforderlicher Eingabefelder und damit eine größere Gestaltungsfreiheit und Übersichtlichkeit hinsichtlich des verwendeten Bedienungsfeldes geschaffen wird.

## Patentansprüche

1. Verfahren zum Auswählen von Bezeichnungen aus wenigstens einem vorgegebenen Wortschatz, wobei das Verfahren folgende Schritte aufweist:
- Eingeben, in einem Zeicheneingabemodus, alphanumerischer Zeichen über eine Eingabeeinheit (20), wobei die Eingabeeinheit (20) eine Mehrzahl von Eingabefeldern (21, 22, 23, ...) aufweist, wobei wenigstens einigen der Eingabefelder (21, 22, 23, ...) mehrere alphanumerische Zeichen zugeordnet sind.
- Wechseln von dem Zeicheneingabemodus in einen Auswahlmodus, wenn eine vorbestimmte Bedingung erfüllt ist, wobei in dem Auswahlmodus in Abhängigkeit von der bislang eingegebenen Zeichenfolge eine Kandidatenliste mit einem oder mehreren Kandidaten aus dem vorgegebenen Wortschatz pr äsentiert wird; und
- Auswählen eines Kandidaten aus der Kandidatenliste
**dadurch gekennzeichnet, dass**
zur Eingabe jedes alphanumerischen Zeichens im Zeicheneingabemodus jeweils nur eine einmalige Bestätigung eines Eingabefeldes (21, 22, 23, ...) vorgenommen wird; und
die vorbestimmte Bedingung erfüllt ist, wenn die Anzahl von in dem betreffenden Wortschatz enthaltenen Bezeichnungen, denen wenigstens eine der bislang eingegebenen Zeichenfolgen zugeordnet werden kann, einen vorgegebenen Schwellwert unterschreitet.

2. Verfahren nach Anspruch 1,
**dadurch gekennzeichnet, dass**
dieses vor dem Schritt des Eingebens alphanumerischer Zeichen den weiteren Schritt aufweist:
Auswählen eines Wortschatzes aus einer Mehrzahl unterschiedlicher Wortschätze, wobei der ausgewählte Wortschatz nach Wechseln in den Auswahlmodus für die Präs entation des einen oder mehrerer Kandidaten zugrunde gelegt wird.

3. Verfahren nach Anspruch 1 oder 2,
**dadurch gekennzeichnet, dass**
für den Fall, dass die bislang eingegebene Zeichenfolge eindeutig einer bestimmten Bezeichnung aus dem vorgegebenen Wortschatz zugeordnet werden kann, eine automatische Eingabebestätigung erfolgt.

4. Verfahren nach einem der Ansprüche 1 bis 3,
**dadurch gekennzeichnet, dass**
schrittweise nach jeder Eingabe im Zeicheneingabemodus eine automatische Aussortierung von Bezeichnungen in dem vorgegebenen Wortschatz erfolgt, welchen keine der bislang eingegebenen Zeichenfolgen zugeordnet werden kann.

5. Verfahren nach einem der vorhergehenden Ansprüche,
**dadurch gekennzeichnet, dass**
nach jeder Eingabe im Zeicheneingabemodus ein Eingabefeld (21, 22, 23, ...) deaktiv iert wird, falls keine derjenigen Zeichenfolgen, die sich aus Hinzufügung eines beliebigen Zeichens der dem jeweiligen Eingabefeld (21, 22, 23, ...) zugeordneten Zeichen zu den bislang eingegebenen Zeichenfolgen ergeben, einer Bezeichnung aus dem vorgegebenen Wortschatz zugeordnet werden kann.

6. Verfahren nach einem der vorhergehenden Ansprüche,
**dadurch gekennzeichnet, dass**
nach jeder Eingabe im Eingabemodus die Anzahl der verbliebenen Kandidaten aus dem vorgegebenen Wortschatz, welche wenigstens einer der bislang eingegebenen Zeichenfolgen zugeordnet werden können, präsentiert wird.

7. Verfahren nach einem der vorhergehenden Ansprüche,
**dadurch gekennzeichnet, dass**
in dem Auswahlmodus die Kandidaten der Kandidatenliste gemäß wenigstens einem vorgegebenen Kriterium hinsichtlich der Reihenfolge ihrer Präsentation prior isiert werden.

8. Verfahren nach einem der vorhergehenden Ansprüche,
**dadurch gekennzeichnet, dass**
auch nach Wech sel in den Auswahlmodus alternativ zur direkten Auswahl aus der Kandidatenliste eine weitere Einschränkung der Kandidatenliste in der Art des Zeicheneingabemodus durch Eingabe weiterer alphanumerischer Zeichen über die Eingabeeinheit (20) ermöglicht wird.

9. Vorrichtung zum Auswählen von Bezeichnungen aus wenigstens einem vorgegebenen Wortschatz, zur Durchführung eines Verfahrens nach einem der vorhergehenden Ansprüche, mit
einer Eingabeeinheit (20), welche eine Mehrzahl von Eingabefeldern (21, 22, 23, ...) aufweist, wobei wenigstens einigen der Eingabefelder (21, 22 ,23,...) mehrere alphanumerische Zeichen zugeordnet sind, wobei über die Eingabeeinheit (20) in einem Zeicheneingabemodus alphanumerische Zeichen eingebbar sind;
wobei die Vorrichtung derart konfiguriert ist, dass ein Wechsel von dem Zeicheneingabemodus in einen Auswahlmodus erfolgt, wenn eine vorbestimmte Bedingung erfüllt ist, wobei in dem Auswahlmodus in Abhängigkeit von der bislang eingegebenen Zeichenfolge eine Kandidatenliste mit einem oder mehreren Kandidaten aus dem vorgegebenen Wortschatz präsentiert wird und wobei in dem Auswahlmodus ein Kandidat aus der Kandidatenliste auswählbar ist:
**dadurch gekennzeichnet, dass**
die Eingabeeinheit (20) derart ausgelegt ist, dass zur Eingabe jedes alphanumerischen Zeichens im Zeicheneingabemodus jeweils nur eine einmalige Betätigung eines Eingabefeldes (21, 22, 23, ...) vorzunehmen ist;
wobei die vorbestimmte Bedingung erfüllt ist, wenn die Anzahl von in dem betreffenden Wortschatz enthaltenen Bezeichnungen, denen wenigstens eine der bislang eingegebenen Zeichenfolgen zugeordnet werden kann, einen vorgegebenen Schwellwert unterschreitet.

## Claims

1. Method for selecting labels from at least one prescribed vocabulary, where the method comprises the following steps:
- inputting, in a character input mode, alphanumeric characters using an input unit (20), where the input unit (20) has a plurality of input fields (21, 22, 23, ...), with at least some of the input fields (21, 22, 23,...) having a plurality of associated alphanumeric characters;
- changing from the character input mode to a selection mode when a predetermined condition has been met, where a candidate list with one or more candidates from the prescribed vocabulary is presented in the selection mode on the basis of the hitherto input character string; and
- selecting a candidate from the candidate list,
**characterized in that**
any alphanumeric character is input in the character input mode by respectively operating an input field (21, 22, 23,...) only once; and the predetermined condition has been met when the number of labels which the relevant vocabulary contains and which can have at least one of the hitherto input character strings associated with them is below a prescribed threshold value.

2. Method according to Claim 1,
**characterized in that**
it comprises the following further step before the step of inputting alphanumeric characters:
selecting a vocabulary from a plurality of different vocabularies, where the selected vocabulary is taken as a basis for presenting the one or more candidates after changing to the selection mode.

3. Method according to Claim 1 or 2,
**characterized in that** if the hitherto input character string can be explicitly associated with a particular label from the prescribed vocabulary then automatic input confirmation takes place.

4. Method according to one of Claims 1 to 3,
**characterized in that**
any input in the character input mode is followed by step-by-step automatic sorting of labels in the prescribed vocabulary which are not able to have any of the hitherto input character strings associated with them.

5. Method according to one of the preceding claims,
**characterized in that**
any input in the character input mode is followed by an input field (21, 22, 23,...) being deactivated if none of those character strings which are obtained from adding any character from the characters associated with the respective input field (21, 22, 23,...) to the hitherto input character strings can be associated with a label from the prescribed vocabulary.

6. Method according to one of the preceding claims,
**characterized in that**
any input in the input mode is followed by presentation of the number of remaining candidates from the prescribed vocabulary which are able to be associated with at least one of the hitherto input character strings.

7. Method according to one of the preceding claims,
**characterized in that**
in the selection mode the candidates in the candidate list have the order of their presentation prioritized on the basis of at least one prescribed criterion.

8. Method according to one of the preceding claims,
**characterized in that**
even after changing to the selection mode, as an alternative to direct selection from the candidate list, further restriction of the candidate list in the manner of the character input mode is made possible through the input of further alphanumeric characters using the input unit (20).

9. Apparatus for selecting labels from at least one prescribed vocabulary, for the purpose of carrying out a method according to one of the preceding claims, having
an input unit (20) which has a plurality of input fields (21, 22, 23, ...), wherein at least some of the input fields (21, 22, 23, ...) have a plurality of associated alphanumeric characters, wherein the input unit (20) can be used to input alphanumeric characters in a character input mode;
wherein the apparatus is configured such that a change is made from the character input mode to a selection mode when a predetermined condition has been met, wherein a candidate list with one or more candidates from the prescribed vocabulary is presented in the selection mode on the basis of the hitherto input character string and wherein a candidate can be selected from the candidate list in the selection mode;
**characterized in that**
the input unit (20) is designed such that any alphanumeric character can be input in the character input mode by respectively operating an input field (21, 22, 23, ...) only once;
wherein the predetermined condition has been met when the number of labels which the relevant vocabulary contains and which can have at least one of the hitherto input character strings associated with them is below a prescribed threshold value.

## Revendications

1. Procédé de sélection de désignations à partir d'au moins un vocabulaire prédéfini, le procédé présentant les étapes suivantes :
- saisie, dans un mode de saisie de caractères, de caractères alphanumériques par le biais d'une unité de saisie (20), l'unité de saisie (20) présentant une pluralité de champs de saisie (21, 22, 23, ...), plusieurs caractères alphanumériques étant associés à au moins quelques-uns des champs de saisie (21, 22, 23, ...) ;
- passage du mode de saisie de caractères en un mode de sélection lorsqu'une condition prédéfinie est remplie, une liste de candidats qui contient un ou plusieurs candidats issus du vocabulaire prédéfini étant présentée dans le mode de sélection en fonction de la séquence de caractères saisie jusqu'à présent ;
et
- sélection d'un candidat dans la liste de candidats ;
**caractérisé en ce que**
un seul et unique actionnement d'un champ de saisie (21, 22, 23, ...) a respectivement lieu pour la saisie de chaque caractère alphanumérique dans le mode de saisie de caractères ; et
la condition prédéfinie est remplie lorsque le nombre de désignations contenues dans le vocabulaire concerné, auxquelles peut être associée au moins l'une des séquences de caractères saisies jusqu'à présent, est inférieur à une valeur de seuil prédéfinie.

2. Procédé selon la revendication 1, **caractérisé en ce que** celui-ci présente l'étape supplémentaire ci-après avant l'étape de saisie de caractères alphanumériques :
sélection d'un vocabulaire parmi une pluralité de vocabulaires différents, le vocabulaire choisi servant de fondement pour la présentation de l'un ou des plusieurs candidats après être passé dans le mode de sélection.

3. Procédé selon la revendication 1 ou 2, **caractérisé en ce que** dans le cas où la séquence de caractères saisie jusqu'à présent peut être associée explicitement à une désignation donnée issue du vocabulaire prédéfini, une confirmation automatique de la saisie a lieu.

4. Procédé selon l'une des revendications 1 à 3, **caractérisé en ce qu'**un tri automatique des désignations dans le vocabulaire prédéfini a lieu pas à pas après chaque saisie en mode de saisie de caractères auxquelles aucune des séquences de caractères saisies jusqu'à présent ne peut être associée.

5. Procédé selon l'une des revendications précédentes, **caractérisé en ce qu'**après chaque saisie en mode de saisie de caractères, un champ de saisie (21, 22, 23, ...) est désactivé si aucune des séquences de caractères, qui résultent de l'ajout d'un caractère quelconque parmi les caractères associés au champ de saisie (21, 22, 23, ...) correspondant aux séquences de caractères saisies jusqu'à présent, ne peut être associée à une désignation issue du vocabulaire prédéfini.

6. Procédé selon l'une des revendications précédentes, **caractérisé en ce qu'**après chaque saisie en mode de saisie, le nombre de candidats restants issus du vocabulaire prédéfini auxquels peut être associée au moins l'une des séquences de caractères saisies jusqu'à présent est présenté.

7. Procédé selon l'une des revendications précédentes, **caractérisé en ce que** dans le mode de sélection, les candidats de la liste de candidats se voient attribuer une priorité pour l'ordre de leur présentation conformément à au moins un critère prédéfini.

8. Procédé selon l'une des revendications précédentes, **caractérisé en ce qu'**également après le passage dans le mode de sélection, en variante à la sélection directe à partir de la liste de candidats, une restriction supplémentaire de la liste de candidats à la manière du mode de saisie de caractères est rendue possible en saisissant des caractères alphanumériques supplémentaires par le biais de l'unité de saisie (20).

9. Dispositif de sélection de désignations à partir d'au moins un vocabulaire prédéfini, pour mettre en oeuvre un procédé selon l'une des revendications précédentes, comprenant :
- une unité de saisie (20), laquelle présente une pluralité de champs de saisie (21, 22, 23, ...), plusieurs caractères alphanumériques étant associés à au moins quelques-uns des champs de saisie (21, 22, 23, ...), des caractères alphanumériques pouvant être saisis par le biais de l'unité de saisie (20) dans un mode de saisie de caractères ;
- le dispositif étant configuré de telle sorte qu'un passage du mode de saisie de caractères en un mode de sélection a lieu lorsqu'une condition prédéfinie est remplie, une liste de candidats qui contient un ou plusieurs candidats issus du vocabulaire prédéfini étant présentée dans le mode de sélection en fonction de la séquence de caractères saisie jusqu'à présent ; et, dans le mode de sélection, un candidat pouvant être sélectionné dans la liste de candidats ;
**caractérisé en ce que**
l'unité de saisie (20) est conçue de telle sorte qu'un seul et unique actionnement d'un champ de saisie (21, 22, 23, ...) doit respectivement avoir lieu pour la saisie de chaque caractère alphanumérique dans le mode de saisie de caractères ;
la condition prédéfinie étant remplie lorsque le nombre de désignations contenues dans le vocabulaire concerné, auxquelles peut être associée au moins l'une des séquences de caractères saisies jusqu'à présent, est inférieur à une valeur de seuil prédéfinie.
